# EUROPÄISCHE PATENTANMELDUNG

(11) **EP 1 820 964 A1**
(43) Veröffentlichungstag der Anmeldung: **22.08.2007**
(21) Anmeldenummer: 06003297.6
(22) Anmeldetag: 17.02.2006
(51) Int. Cl.: F03G 6/00

(54) **Verfahren und Vorrichtung zur gezielten Erhöhung der elektrischen Energieerzeugung eines solarthermischen Kraftwerks**

(71) Anmelder: SIEMENS AKTIENGESELLSCHAFT, 80333 München (DE)
(72) Erfinder: Birnbaum, Jürgen, 88289 Waldburg (DE); Fichtner, Markus, 91639 Wolframs-Eschenbach (DE); Graeber, Carsten, 91056 Erlangen (DE); Zimmermann, Dr. Gerhard, 91315 Höchstadt/Aisch (DE)

(57) **Zusammenfassung**

Die Erfindung betrifft ein Verfahren zur gezielten Erhöhung der Erzeugung elektrischer Energie eines solarthermischen Kraftwerks (1), bestehend aus einem solaren Kraftwerkteil (2) mit einem Solarfeldkreislauf (3) und einem konventionellen Kraftwerkteil (10) mit einem Wasser-Dampf-Kreislauf (11), wobei die im solaren Kraftwerkteil (2) erzeugte Energie mittels Wärmetausch dem konventionellen Kraftwerkteil (10) zugeführt wird und wobei dem Wasser-Dampf-Kreislauf (11) des konventionellen Kraftwerkteils (10) eine zusätzliche Wärmeenergie zugeführt wird. Die Erfindung betrifft ebenfalls eine Vorrichtung zur gezielten Erhöhung der Erzeugung elektrischer Energie eines solarthermischen Kraftwerks (1), insbesondere zum Durchführen dieses Verfahrens.

## Beschreibung

Die Erfindung betrifft ein Verfahren zur gezielten Erhöhung der Erzeugung elektrischer Energie eines solarthermischen Kraftwerks, bestehend aus einem solaren Kraftwerkteil mit einem Solarfeldkreislauf und einem konventionellen Kraftwerkteil mit einem Wasser-Dampf-Kreislauf, wobei die im solaren Kraftwerkteil erzeugte Energie mittels Wärmetausch dem konventionellen Kraftwerkteil zugeführt wird. Weiterhin betrifft die Erfindung eine Vorrichtung welche eine Durchführung des Verfahrens zulässt.

Ein solarthermisches Kraftwerk nutzt solare Strahlungsenergie um elektrische Energie zu produzieren. Es besteht aus einem solaren Kraftwerkteil zur Absorption der Sonnenenergie und einem konventionellen Kraftwerkteil. Der solare Kraftwerkteil umfasst dabei ein Solarfeldkreislauf mit einem Solarfeld, das heißt ein Konzentrationssystem, welches geometrisch verschiedene Kollektoren umfasst. Die konzentrierenden Kollektoren sind der Hauptbestandteil des solaren Kraftwerkteils. Bekanntere Kollektoren sind dabei der Paraboloidrinnenkollektor, der Fresnel-Kollektor, der Solar-Turm und der Paraboloidspiegel. Die Kollektoren konzentrieren die Sonnenstrahlen auf ein in der Fokuslinie platziertes Absorberrohr. Dort wird die Sonnenenergie absorbiert und als Wärme an ein Wärmeträgermedium weitergegeben. Je nach Art des Wärmeträgermediums wird es nach der Erhitzung direkt zum Kraftwerkteil gepumpt. Als Wärmeträgermedium kann dabei Thermoöl, Wasser, Luft oder Salzschmelze zum Einsatz kommen.
Weiterhin können noch verschiedene Speichermöglichkeiten wie Salzschmelze-Speicher, Dampfspeicher, Feststoffspeicher, usw. und Zusatzfeuerungen (Erdöl, Erdgas) im solaren Kraftwerkteil eingebunden werden, um einen gleichmäßigeren und erweiterten Wärmeeintrag sicherzustellen. Der konventionelle Kraftwerkteil umfasst zumeist einen Wasser-Dampf-Kreislauf mit einer Dampf- oder/und Gasturbine, einen Generator und einen Kondensator. Umfasst beispielsweise dabei der konventionelle Kraftwerkteil eine Dampfturbine, so wird dabei der Wärmeeintrag durch den Kessel, ersetzt durch den Wärmeeintrag erzeugt vom Solarfeld.
Wird im Solarfeld nicht Wasser als Wärmeträgermedium verwendet, so sind zwischen dem solaren Kraftwerkteil, dem dazugehörenden Solarfeldkreislauf und dem Kraftwerkteil mit dem dazugehörenden Wasser-Dampf-Kreislauf, Wärmetauscher zwischengeschaltet, um die im Solarfeld erzeugte Energie vom Wärmeträgermedium des Solarfeldkreislaufes auf den Wasser-Dampf-Kreislauf zu übertragen.
Die elektrische Leistung des solarthermischen Kraftwerks ist daher zum einen durch die thermischen Eigenschaften des Wärmeträgermediums zum anderen in hohem Maß durch die Wahl des Leistungsbereichs der Turbine festgelegt. Um die maximale Leistung zu erreichen, ist ein maximaler thermischer Wärmeeintrag in den Wasser-Dampf-Kreislauf notwendig. Geringere und beispielsweise, durch den Durchzug von Wolkendecken unterbrochene Sonneneinstrahlung erzeugt jedoch einen nicht konstanten Wärmeeintrag in der Turbine und eine geringere Energieerzeugung. Gerade auch bei dem Anfahren der Dampfturbine des Kraftwerkteils erweist sich dies immer wieder als Problem.

Die auf das Verfahren bezogene Aufgabe der Erfindung ist daher die Angabe eines Verfahrens zur gezielten Erhöhung der Erzeugung elektrischer Energie in einem solarthermischen Kraftwerk bestehend aus einem solaren Kraftwerkteil und einen konventionellen Kraftwerkteil, so dass insbesondere ein zuverlässiges Anfahren des konventionellen Kraftwerkteils beispielsweise einer Turbine gewährleistet ist. Eine weitere Aufgabe ist die Angabe einer Vorrichtung, die insbesondere eine Durchführung des oben genannten Verfahrens ermöglicht.

Bezogen auf das Verfahren wird die Aufgabe gelöst durch ein Verfahren zur gezielten Erhöhung der Erzeugung elektrischer Energie eines solarthermischen Kraftwerks, bestehend aus einem solaren Kraftwerkteil mit einem Solarfeldkreislauf und einem konventionellen Kraftwerkteil mit einem Wasser-Dampf-Kreislauf, wobei die im solaren Kraftwerkteil erzeugte Energie mittels Wärmetausch dem konventionellen Kraftwerkteil zugeführt wird, und wobei dem Wasser-Dampf-Kreislauf des konventionellen Kraftwerkteils eine zusätzliche Wärmeenergie zugeführt wird.

Die Erfindung geht dabei von der Feststellung aus, dass gerade beim Anfahren eines konventionellen Kraftwerkteils, beispielsweise einer Turbine, dem konventionellen Kraftwerkteil teilweise nicht genügend Energie zur Verfügung steht, um hier beispielsweise ein zuverlässiges Anfahren zu ermöglichen. Die Erfindung geht weiterhin von der Erkenntnis aus, dass bei einer zusätzlichen Wärmeenergie im Solarfeldkreislauf, beispielsweise durch eine Zusatzfeuerung, diese zunächst für die Erwärmung des Solarfeldkreislaufes selber verwendet wird. Zudem treten Verluste durch den Wärmetausch auf. Dadurch steht diese zusätzliche Wärmeenergie dem Kraftwerkteil zum Beispiel beim Anfahren und auch bei der Stromerzeugung nicht zur Verfügung. Die erfindungsgemäße Lösung sieht daher eine zusätzliche Wärmeenergie im Wasser-Dampf-Kreislauf des konventionellen Kraftwerkteils selber vor. Dadurch werden die oben genannten Verluste vermieden. Durch die gezielte zusätzliche Wärmeenergie im Wasser-Dampf-Kreislauf wird der konventionelle Kraftwerkteil beispielsweise die Turbine zuverlässig angefahren. Zusätzlich wird durch die gezielte Wärmeenergie im Wasser-Dampf-Kreislauf bei Bedarf zusätzlicher Dampf erzeugt und damit die Energieerzeugung erhöht. Dies ist dann der Fall, wenn im Wasser-Dampf-Kreislauf ein zu geringer Massenstrom vorhanden ist, als es der Auslegung des Massenstroms des konventionellen Kraftwerkteils entspricht. Somit kann durch die gezielte zusätzliche Wärmeenergie das Niveau des Massenstroms im Wasser-Dampf-Kreislauf auf das Niveau des Massenstroms im Wasser-Dampf-Kreislauf für den Auslegungsfall gebracht werden. Weiterhin verhindert eine gezielte zusätzliche Wärmeenergie das Abkühlen des Wasser-Dampf-Kreislaufes und so beispielsweise das Auskühlen der Turbine.

Bevorzugt wird die zusätzlich Wärmeenergie gezielt so eingestellt, dass sie im Wesentlichen eine Anpassung einer Temperatur des Wasser-Dampf-Kreislaufs an die Temperatur für den Auslegungsfall des Wasser-Dampf-Kreislaufs bewirkt. Der konventionelle Kraftwerkteil und der darin befindliche Wasser-Dampf-Kreislauf ist nämlich für eine bestimmte Betriebstemperatur ausgelegt. Die zusätzlich Wärmeenergie wird damit vorteilhafterweise so gezielt eingestellt, dass die Temperatur des Wasser-Dampf-Kreislaufs im Wesentlichen diesem Auslegungsfall angepasst wird.

Bevorzugt wird zur Stromerzeugung ein Generator, eine Niederdruck- und eine Hochdruckturbine verwendet.

Bevorzugt wird der Wasser-Dampf des Wasser-Dampf-Kreislaufs zwischen Hochdruck- und Niederdruckturbine zwischen überhitzt. Bei dieser Ausgestaltung, dass heißt einer Zwischenüberhitzung in Verbindung mit einer Zusatzfeuerung wird vorteilhafterweise der Wärmetausch zur Zwischenüberhitzung durch den Dampfkessel ersetzt. Dies bedeutet, dass die Energie des Solarfelds komplett zum Betrieb der Hochdruckturbine genutzt wird.

In bevorzugter Ausgestaltung wird die zusätzliche Wärmeenergie in den Wasser-Dampf-Kreislauf des konventionellen Kraftwerkteils zwischen Hochdruck- und Niederdruckturbine eingebracht. Hier wird die zusätzliche Wärmeenergie bevorzugt vor der Niederdruckturbine eingebracht. Der Einbau der zusätzlichen Wärmeenergie vor der Niederdruckturbine ermöglicht den Einsatz eines robusten und günstigen Dampfkessels (Großwasserraumkessel) mit entsprechend gutem Anfahrverhalten. Bei Platzierung der zusätzlichen Wärmeenergie zwischen Hochdruck- und Niederdruckturbine wird der Dampfkessel zum Anfahren der Turbine genutzt. Ebenso kann die Niederdruckturbine mit Hilfe der zusätzlichen Wärmeenergie in Volllast betrieben und die Hochdruckturbine ausgekoppelt werden.

Bezogen auf die Vorrichtung wird die Aufgabe gelöst durch eine erfindungsgemäße Vorrichtung zur gezielten Erhöhung der Erzeugung elektrischer Energie eines solarthermischen Kraftwerks, bestehend aus einem solaren Kraftwerkteil mit einem Solarfeldkreislauf und einem konventionellen Kraftwerkteil mit einem Wasser-Dampf-Kreislauf, wobei der erste solare Kraftwerkteil über einen Wärmetauscher wärmetechnisch mit dem konventionellen Kraftwerkteil gekoppelt ist, und wobei in dem Wasser-Dampf-Kreislauf des konventionellen Kraftwerkteils mindestens eine Zusatzfeuerung vorgesehen ist.

Die Vorrichtung ist insbesondere dafür geeignet, das oben beschriebene Verfahren durchzuführen. Die Vorteile des Verfahrens ergeben sich daher auch für die Vorrichtung.

Weitere Vorteile, Merkmale und Einzelheiten der Erfindung ergeben sich aus der nachfolgenden Beschreibung bevorzugter Ausführungsbeispiele und Zeichnungen sowie aus weiteren Unteransprüchen.

Im Folgenden wird die Erfindung beispielhaft anhand einer Zeichnung näher erläutert.

Darin zeigt in vereinfachter und nicht maßstäblicher Darstellung:
FIG 1 eine erfindungsgemäße Vorrichtung eines solarthermischen Kraftwerks,
FIG 2 eine weitere, erfindungsgemäße Vorrichtung eines solarthermischen Kraftwerks.

Gleiche Teile sind in allen Figuren mit denselben Bezugszeichen versehen.

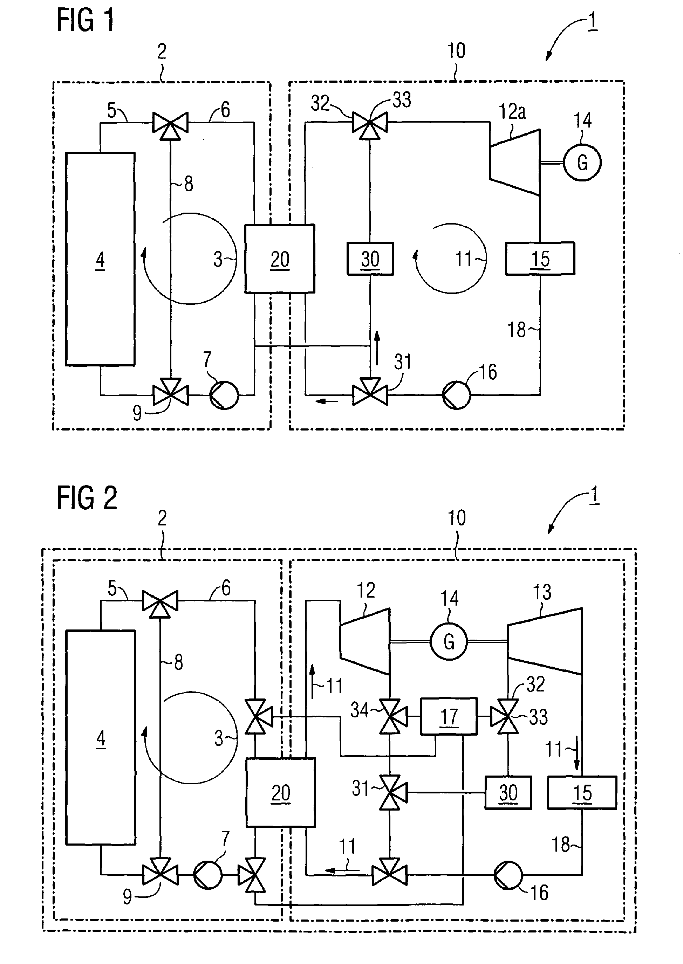

FIG 1 zeigt schematisch ein solarthermisches Kraftwerk 1 gemäß der Erfindung. Dabei besteht das solarthermische Kraftwerk 1 aus einem solaren Kraftwerkteil 2 und einem konventionellem Kraftwerkteil 10. Der solaren Kraftwerkteil 2 besteht aus einem Solarfeldkreislauf 3 in welchem sich einem Solarfeld 4 mit einer Anzahl von Sonnenkollektoren befindet. Das Solarfeld 4 erzeugt Wärme und gibt diese im Solarfeldkreislauf 3 an ein Wärmeträgermedium 6 in Leitungen 5 ab. Das Wärmeträgermedium 6 wird anschließend mittels der Leitungen 5 einen oder mehreren Wärmetauschern 20 zugeführt. Diese gibt durch beispielsweise Konvektion die Energie an den konventionellem Kraftwerkteil 10 ab. Das so abgekühlte Wärmeträgermedium 6 in Leitungen 6 wird wieder den Solarfeld 4 zugeführt. Dies kann beispielsweise mittels einer Solarfeldpumpe 7 erfolgen. Auch können im Solarfeldkreislauf 3 Bypass-Leitungen 8 eingebaut sein, die einen Teil des Wärmeträgermediums an den Wärmetauschern 20 vorbeiführen und/oder Speicher oder Zusatzfeuerungen (nicht gezeigt).

Mittels des Wärmetauschers 20 wird also die Energie vom solaren Kraftwerkteil 2 auf den konventionellen Kraftwerkteil 10 übertragen. Dabei besteht der konventionellen Kraftwerkteil 10 aus einem Wasser-Dampf-Kreislauf 11 in Leitungen 18. Der Wasser-Dampf-Kreislauf 11 umfasst eine Turbine 12a und ein Generator 13 zur elektrischen Energieerzeugung sowie einen Kondensator 15. Nach passieren des Wärmetauschers 20 entsteht im Wasser-Wasser-Dampf-Kreislauf 11 Dampf der mittels der Turbine 12a einen Generator 12 antreibt. Danach wird der so abgekühlte Wasser-Dampf einem Kondensator 15 zugeführt, in dem sich der Wasser-Dampf weiter entspannt und beispielsweise mittels einer Speisewasserpumpe 16 zum Wärmetauscher 20 zurückgepumpt wird. Bestandteil des konventionellen Kraftwerks 10 kann auch eine Speicherung (nicht gezeigt) sein. Um nun ein zuverlässiges Anfahren der Turbine 12a zu gewährleisten sowie zur Erhöhung der elektrischen Energieerzeugung wird nun eine zusätzliche Wärmeenergie beispielsweise durch eine Zusatzfeuerung 30 parallel zum Wärmetauscher 20 eingebracht. Mittels einer Regel- 31 und Mischarmatur 32 lässt sich der Massenstrom des abgezweigten zurückfließenden Wasser-Dampfes regulieren. Dieser abgezweigte Massenstrom durchfließt dann die Zusatzfeuerung 30 und wird verdampft. Der so erhitze Wasser-Dampf wird an einem Mischpunkt 33 wieder dem zur Turbine 12a fließenden ursprünglichen Wasser-Dampf zugeströmt. Somit steht der Turbine 12a mehr Dampf zur Verfügung. Damit ist beispielsweise ein zuverlässiges Anfahren der Turbine 12a gewährleistet. Weiterhin wird so die Dampftemperatur an der Turbine 12a erhöht, so dass sie der Temperatur für den Auslegungsfall der Turbine 12a entspricht.
Ist im Wasser-Dampf-Kreislauf 11 ein zu geringer Massenstrom vorhanden, als es der Auslegung des Massenstroms des konventionellen Kraftwerkteils 10 entspricht, wird so zusätzlich Wasser über die Zusatzfeuerung 30 verdampft und das Niveau des Massenstroms im Wasser-Dampf-Kreislauf 11 auf das Niveau des Massenstroms im Wasser-Dampf-Kreislauf 11 für den Auslegungsfall gebracht. Zusätzlich verhindert eine gezielte zusätzliche Wärmeenergie das Auskühlen der Turbine 12a.

FIG 2 zeigt eine weitere Ausgestaltung eines solarthermischen Kraftwerks 1 gemäß der Erfindung. Hier wird im konventionellem Kraftwerkteil 10 eine Hochdruck- 12 und eine Niederdruckturbine 13 mit einem Generator 14 zur Stromerzeugung verwendet. Dabei wird zwischen der Hochdruck- 12 und der Niederdruckturbine 13 ein Zwischenüberhitzer 17 eingebaut, die bedarfsweise über Armaturen 34,33 zugeschaltet werden kann. Weiterhin ist zwischen Hochdruck- 12 und Niederdruckturbine 13 die Zusatzfeuerung 17 geschaltet. Diese kann ebenfalls über die Armaturen 31,33 bedarfsweise geregelt werden. Auch hier kann der konventionelle Kraftwerkteil 10 mit Hilfe der Zusatzfeuerung 17 zuverlässig angefahren werden. Der Einbau der Zusatzfeuerung 17 vor der Niederdruckturbine 13 ermöglicht den Einsatz eines robusten und günstigen Dampfkessels (Großwasserraumkessel) mit entsprechend gutem Anfahrverhalten. Bei Platzierung der Zusatzfeuerung 17 zwischen der Hochdruck- 12 und der Niederdruckturbine 13 wird der Dampfkessel (nicht gezeigt) zum Anfahren genutzt. Ebenso kann die Niederdruckturbine 13 mit Hilfe der Zusatzfeuerung 17 in Volllast betrieben und die Hochdruckturbine 12 ausgekoppelt werden. In dieser Ausgestaltung kann ein Wärmetauscher zur Zwischenüberhitzung 17 durch den Dampfkessel ersetzt werden, das heißt die Energie aus solaren Kraftwerkteil 2 wird komplett zum Betrieb der Hochdruckturbine 12 genutzt.

Das erfindungsgemäße Verfahren und die erfindungsgemäße Vorrichtung ermöglichen also das zuverlässige Anfahren der Turbine, die Erhöhung der Wasser-Dampf-Temperatur auf die Auslegungstemperatur des konventionellen Kraftwerkteils sowie die Erzeugung zusätzlichen Dampfes um den Massenstrom des konventionellen Kraftwerkteils dem Auslegungsfall anzupassen. Weiterhin verhindert das erfindungsgemäße Verfahren und die erfindungsgemäße Vorrichtung das Auskühlen der Turbine. Ebenfalls ermöglicht es die Auskopplung der Hochdruckturbine, so dass dann die Fahrweise der Niederdruckturbine in Volllast ermöglicht ist.

## Patentansprüche

1. Verfahren zur gezielten Erhöhung der Erzeugung elektrischer Energie eines solarthermischen Kraftwerks (1), bestehend aus einem solaren Kraftwerkteil (2) mit einem Solarfeldkreislauf (3) und einem konventionellen Kraftwerkteil (10) mit einem Wasser-Dampf-Kreislauf (11), wobei die im solaren Kraftwerkteil (2) erzeugte Energie mittels Wärmetausch dem konventionellen Kraftwerkteil (10) zugeführt wird **dadurch gekennzeichnet, dass** dem Wasser-Dampf-Kreislauf (11) des konventionellen Kraftwerkteils (10) eine zusätzliche Wärmeenergie zugeführt wird.

2. Verfahren nach Anspruch 1, **dadurch gekennzeichnet, dass** die zusätzliche Wärmeenergie parallel zum Wärmetausch eingebracht wird.

3. Verfahren nach Anspruch 1 oder 2, **dadurch gekennzeichnet, dass** die zusätzliche Wärmeenergie gezielt so eingestellt wird, dass sie im Wesentlichen eine Anpassung einer Temperatur des Wasser-Dampf-Kreislaufs (11) an die Temperatur für den Auslegungsfall des Wasser-Dampf-Kreislaufs (11) bewirkt.

4. Verfahren nach einem der vorhergehenden Ansprüche,
**dadurch gekennzeichnet, dass** zur Stromerzeugung ein Generator (14), eine Niederdruck-(13) und eine Hochdruckturbine (12) verwendet werden.

5. Verfahren nach Anspruch 4,
**dadurch gekennzeichnet, dass** der Wasser-Dampf des Wasser-Dampf-Kreislaufs (11) zwischen Hochdruck (12) - und Niederdruckturbine (13) zwischen überhitzt wird.

6. Verfahren nach Anspruch 4 oder 5, **dadurch gekennzeichnet, dass** die zusätzliche Wärmeenergie in den Wasser-Dampf-Kreislauf (11) des konventionellen Kraftwerkteils (10) zwischen Hochdruck (12) - und Niederdruckturbine (13) eingebracht wird.

7. Vorrichtung zur gezielten Erhöhung der Erzeugung elektrischer Energie eines solarthermischen Kraftwerks (1), bestehend aus einem solaren Kraftwerkteil (2) mit einem Solarfeldkreislauf (3) und einem konventionellen Kraftwerkteil (10) mit einem Wasser-Dampf-Kreislauf (11), wobei der erste solare Kraftwerkteil (2) über einen Wärmetauscher (20) wärmetechnisch mit dem konventionellen Kraftwerkteil (10) gekoppelt ist **dadurch gekennzeichnet, dass** in den Wasser-Dampf-Kreislauf (11) des konventionellen Kraftwerkteils (10) mindestens eine Zusatzfeuerung (30) geschaltet ist.

8. Vorrichtung nach Anspruch 7,
**dadurch gekennzeichnet, dass** der Wärmetauscher (20) aus einer Anzahl von Wärmetauschern besteht.

9. Vorrichtung nach Anspruch 7 oder 8,
**dadurch gekennzeichnet, dass** die mindestens eine Zusatzfeuerung (30) parallel zu einem Wärmetauscher (20) geschaltet ist.

10. Vorrichtung nach Anspruch 7 bis 9,
**dadurch gekennzeichnet, dass** die mindestens eine Zusatzfeuerung (30) eine Misch-(32) und Regelarmatur (31) aufweist sowie einen Mischpunkt (33).

11. Vorrichtung nach Anspruch 7 bis 10,
**dadurch gekennzeichnet, dass** die mindestens eine Zusatzfeuerung einen Mischpunkt (33) aufweist.

12. Vorrichtung nach einem der Ansprüche 7- 11,
**dadurch gekennzeichnet, dass** die Kopplung des solaren Kraftwerkteils (2) und des konventionellen Kraftwerkteils (10) durch Thermoöl und/oder Luft, und/oder Wasserdampf und/oder Salzschmelze vorgesehen ist.

13. Vorrichtung nach einem der Ansprüche 7-12,
**dadurch gekennzeichnet, dass** die mindestens eine Zusatzfeuerung (30) mittels Erdöl oder/und Erdgas vorgesehen ist.

14. Vorrichtung nach einem der Ansprüche 7-13, **dadurch gekennzeichnet, dass** der konventionelle Kraftwerkteil (10) eine Hochdruck- (12) und eine Niederdruckturbine (13) umfasst.

15. Vorrichtung nach Anspruch 14,
**dadurch gekennzeichnet, dass** ein oder mehrere Zwischenüberhitzer (17) zwischen Hochdruck-(12) und Niederdruckturbine (13) vorgesehen sind.

16. Vorrichtung nach Anspruch 14 oder 15,
**dadurch gekennzeichnet, dass** die mindestens eine Zusatzfeuerung (30) zwischen Hochdruck-(12) und Niederdruckturbine (13) angeordnet ist.

17. Vorrichtung nach einem der Ansprüche 7-16,
**dadurch gekennzeichnet, dass** der konventionelle Kraftwerkteil (10) einen Generator (14) zur elektrischen Energieerzeugung umfasst.
